# EUROPÄISCHE PATENTANMELDUNG

(11) **EP 1 035 141 A1**
(43) Veröffentlichungstag der Anmeldung: **13.09.2000**
(21) Anmeldenummer: 00103464.4
(22) Anmeldetag: 29.02.2000
(51) Int. Cl.: C08F 220/12, G03C 1/95

(54) **Perlpolymerisate mit enger Teilchengrössenverteilung**

(30) Priorität: 12.03.1999 DE 19911061
(71) Anmelder: Bayer Aktiengesellschaft, 51368 Leverkusen (DE)
(72) Erfinder: Podszun, Wolfgang, Dr., 51061 Köln (DE); Karlou-Eyrisch, Kamelia, Dr., 40883 Ratingen (DE); Harrison, David Bryan, Dr., 51373 Leverkusen (DE)

(57) **Zusammenfassung**

Perlpolymerisate mit einer mittleren Teilchengröße von größer als 10 und kleiner gleich 50 µm und einer Teilchengrößenverteilung ausgedrückt durch das Verhältnis des 90%-Wertes (Ø (90)) und des 10%-Wertes (Ø (10)) der Volumenverteilung von kleiner 2,0, aufgebaut aus
a) 50 bis 97,5 Gew.-% wenigstens eines Monomeren der Formel (I) 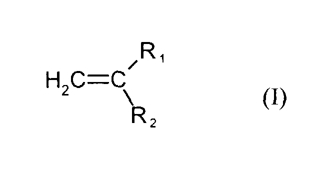 worin
   - R₁: Wasserstoff oder Methyl und
   - R₂: Phenyl oder -COOCH₃ bedeuten,
b) 2 bis 49,5 Gew.-% wenigstens eines Monomeren der Formel (II) 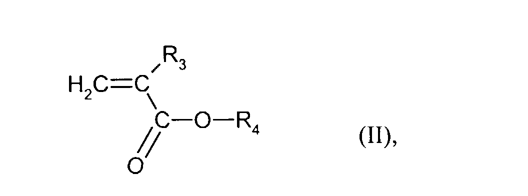 worin
   - R₃: Wasserstoff oder Methyl bedeutet und
   - R₄: Für einen Rest mit 2 bis 20 C-Atomen steht,
c) 0,5 bis 40 Gew.-% eines Monomeren der Formel (III) 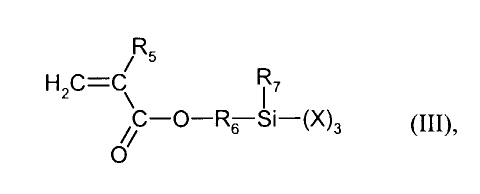 worin
   - R₅: Wasserstoff oder Methyl bedeutet,
   - R₆: für einen zweiwertigen Rest mit 2 bis 8 C-Atomen steht,
   - R₇: ein Alkylrest mit 1 bis 4 C-Atomen bedeutet
   und
   - X: für eine hydrolisierbare Gruppe steht,
   jeweils bezogen auf die Gesamtmenge des Perlpolymerisates.

## Beschreibung

Die Erfindung betrifft vernetzte Perlpolymerisate mit einer mittleren Teilchengröße von größer als 10 und kleiner gleich 50 µm und enger Teilchengrößenverteilung, ein Verfahren zu deren Herstellung, deren Verwendung zur Herstellung flächiger Substrate, besagte flächige Substrate sowie deren Verwendung als Aufzeichnungsmaterial für den Ink-Jet-Druck.

Kugelförmige Polymerisate mit einer mittleren Teilchengröße von 1 bis 50 µm werden vielfältig angewendet, z.B. als Abstandhalter für Filmmaterialien, als Träger für Katalysatoren oder biologisch aktive Substanzen, als Eichsubstanzen für Lichtstreuungsmessungen oder als Ausgangsmaterialien für Chromatographieharze und Ionenaustauscher. Im allgemeinen werden hierfür Polymerisate mit möglichst einheitlicher Teilchengröße gewünscht (im folgenden "monodispers" genannt).

Mit Perlpolymerisaten ausgestattete Aufzeichnungsträger für den Ink-Jet-Druck sind beispielsweise aus US-A-5.714 425 bekannt.

Homopolymerisate wie z.B. Polymethylmethacrylat lassen sich als Perlpolymerisate mit Teilchengrößen von 0,5 bis 10 µm durch Dispersionspolymerisation erzeugen. Ein geeignetes Verfahren wird beispielsweise in EP-A 610 522 beschrieben. Bei der Dispersionspolymerisation wird ein Lösungsmittel, in dem die verwendeten Monomere löslich, das gebildete Polymerisat aber unlöslich ist, eingesetzt. Die Dispersionspolymerisation liefert in der Regel hohe Ausbeuten an kugelförmiger Perlpolymerisate mit enger Teilchengrößenverteilung. Es hat sich allerdings gezeigt, daß es schwierig ist, größere Teilchen, insbesondere Teilchen mit einem Durchmesser von mehr als 7,5 µm durch Dispersionspolymerisation zu erzeugen. Ein weiteres Kennzeichen ist, daß die Teilchengrößenverteilung mit steigender Teilchengröße deutlich breiter wird. Aus EP-A 610 522 geht hervor, daß die Dispersionspolymerisation von Methylmethacrylat mit Styrol als Comonomer zu kleineren Perlen mit deutlich breiterer Teilehengrößenverteilung führt als die Homopolymerisation von Methylmethacrylat.

Gemäß US-A 4,614,708 konnten kugelförmige Copolymerisate aus Methylmethacrylat und anderen Methacrylatestern nur bis zu einer Teilchengröße von 5 µm durch Dispersionspolymerisation hergestellt werden.

In der EP-A 417539 bzw. US-A-5.646.210 werden ebenfalls Perlpolymerisate allerdings mit einer Teilchengröße von kleiner als 10 µm beschrieben, die mit Si-O-Si-Gruppen vernetzt sind.

Perlpolymerisate mit einer Teilchengröße von ca. 10 bis 200 µm können durch Suspensionspolymerisation erhalten werden. Unter dem Begriff Suspensionspolymerisation wird ein Verfahren verstanden, bei dem ein Monomer oder ein monomerhaltiges Gemisch, das einen im Monomeren löslichen Initiator enthält, in einer mit dem Monomeren im wesentlichen nicht mischbaren Phase, die ein Dispergiermittel enthält, in Form von Tröpfchen, gegebenenfalls im Gemisch mit kleinen, festen Partikeln, zerteilt und durch Temperaturerhöhung unter Rühren ausgehärtet wird. Weitere Einzelheiten der Suspensionspolymerisation werden beispielsweise in H. Greens "Polymerization Processes", in: Ullmanns Encyclopedia of Industrial Chemistry, Bd. A21, 5. Aufl. ( B. Elvers, S. Hawkins, G. Schulz, Hrsg.), VCH, Weinheim 1992, S. 363-373 beschrieben.

Ein Nachteil der Suspensionspolymerisation ist die breite Teilehengrößenverteilung der erzeugten Perlpolymerisate. Dieses ist insbesondere bei der Verwendung als Abstandhalter sehr nachteilig.

Für viele Anwendungen werden darüber hinaus Perlpolymerisate mit guter Temperatur- und guter Lösemittelbeständigkeit gewünscht. Diese Eigenschaften sind beispielsweise dann von großer Bedeutung, wenn die Perlpolymerisate als Abstandhalter bei erhöhter Temperatur oder in Anwesenheit von Lösungsmittel auf ein Substrat aufgebracht werden sollen. Übliche Polymethylmethacrylat-Perlpolymerisate oder Polystyrol-Perlpolymerisate versagen unter diesen Bedingungen.

Nach den Methoden des Standes der Technik sind temperatur- und lösungsmittelstabile Perlpolymerisate mit einer mittleren Teilchengröße von größer 10 bis 50 µm und enger Teilchengrößenverteilung nicht zugänglich. Aufgabe der vorliegenden Erfindung war es daher, solche Perlpolymerisate bereitzustellen.

Unter Perlpolymerisat wird im Rahmen der vorliegenden Erfindung ein kugelförmiges Polymerisat verstanden.

Gegenstand der Erfindung sind nun Perlpolymerisate mit einer mittleren Teilchengröße von größer als 10 und kleiner gleich 50 µm und einer Teilchengrößenverteilung ausgedrückt durch das Verhältnis des 90%-Wertes (Ø (90)) und des 10%-Wertes (Ø (10)) der Volumenverteilung von kleiner 2,0, aufgebaut aus
a) 50 bis 97,5, vorzugsweise 55 bis 90, insbesondere 60 bis 85 Gew.-% wenigstens eines Monomeren der Formel (I) 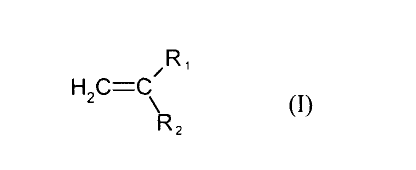 worin
   - R₁: Wasserstoff oder Methyl und
   - R₂: Phenyl oder -COOCH₃ bedeuten,
b) 2 bis 49,5, vorzugsweise 5 bis 40, insbesondere 10 bis 30 Gew.-% wenigstens eines Monomeren der Formel (II) 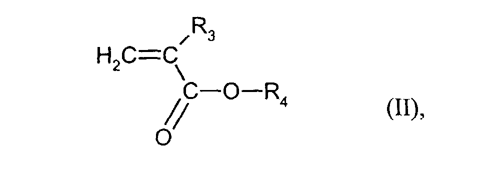 worin
   - R₃: Wasserstoff oder Methyl bedeutet und
   - R₄: für einen Rest mit 2 bis 20 C-Atomen steht, und
c) 0,5 bis 40, vorzugsweise 1 bis 20, insbesondere 2 bis 10 Gew.-% eines Monomeren der Formel (III) 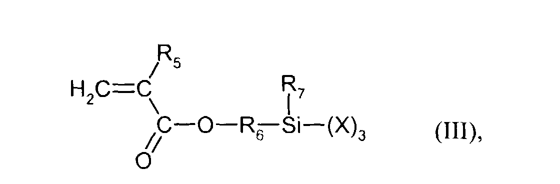 worin
   - R₅: Wasserstoff oder Methyl bedeutet,
   - R₆: für einen zweiwertigen Rest mit 2 bis 8 C-Atomen steht,
   - R₇: ein Alkylrest mit 1 bis 4 C-Atomen bedeutet
   und
   - X: für eine hydrolisierbare Gruppe steht,
   jeweils bezogen auf die Gesamtmenge des Perlpolymerisates.

Zur Bestimmung der mittleren Teilehengröße (Ø) und der Teilchengrößenverteilung wird die Bildanalyse angewendet. Als Maß für die Breite der Teilchengrößenverteilung der erzeugten kugelförmigen Vinylcopolymerisate wird das Verhältnis aus dem 90%-Wert (Ø (90)) und dem 10%-Wert (Ø (10)) der Volumenverteilung gebildet. Enge Teilehengrößenverteilung im Sinne der Erfindung bedeutet Ø (90)/Ø (10) ≤ 2,0, bevorzugt Ø (90)/Ø (10) ≤ 1,5.

Der 90%-Wert (Ø (90)) ist so definiert, daß 90 Vol-% der Teilchen einen kleineren Durchmesser als diesen Wert aufweisen. Entsprechend gilt für den 10 %-Wert (Ø (10)), daß 10 Vol-% der Teilchen einen kleineren Durchmesser als diesen aufweisen.

Die Monomere der Formel I sind Methylmethacrylat, Methylacrylat, Styrol und α-Methylstyrol. Bevorzugt sind Methylmethacrylat und Styrol. Die Monomere der Formel (I) können allein oder als Mischungen eingesetzt werden.

In den Monomeren der Formel (II) bedeutet R₄ vorzugsweise einen aliphatischen, insbesondere verzweigt oder unverzweigt, oder cycloaliphatischen Rest. R₄ kann auch durch ein oder mehrere Sauerstoffatome unterbrochen sein. Es können ein oder mehrere Monomere der Formel (II) eingesetzt werden.

Als Beispiele für Monomere der Formel II seien genannt: Ethylmethacrylat, n-Propylmethacrylat, iso-Propylmethacrylat, n-Butylmethacrylat, iso-Butylmethacrylat, n-Hexylmethacrylat, 2-Ethylhexylmethacrylat, n-Octylmethacrylat, n-Decylmethacrylat, Stearylmethacrylat, Methoxyethylmethacrylat, Methoxybutylmethacrylat, iso-Bornylmethacrylat und Triethylenglycolmonomethacrylat. Bevorzugt sind Ethylmethacrylat, n-Propylmethacrylat, iso-Propylmethacrylat, n-Butylmethacrylat und iso-Butylmethacrylat.

R₆ in Formel III bedeutet vorzugsweise einen C₂- bis C₈-Alkylrest, der ebenfalls durch ein oder mehrere Sauerstoffatome unterbrochen sein kann.

Die hydrolisierbare Gruppe X ist eine Gruppe, die mit Wasser unter Freisetzung von H X eine OH-Gruppe bildet. X steht vorzugsweise für Halogen, insbesondere Chlor, Alkoxy, insbesondere C₁-C₄-Alkoxy, wie Methoxy und Ethoxy sowie Carboxylat, insbesondere Acetat.

Beispiele für die Verbindungen nach Formel (III) sind: γ-Methacryloxypropyl-trimethoxysilan, γ-Methacryloxypropyl-triethoxysilan, γ-Methacryloxypropyl-methyldimethoxysilan, γ-Methacryloxypropyl-methyldiethoxysilan, γ-Acryloxypropyl-trimethoxysilan, γ-Acryloxypropyl-triethoxysilan, γ-Acryloxypropyl-methyl-dimethoxysilan, γ-Acryloxypropyl-methyl-diethoxysilan.

Die erfindungsgemäßen Perlpolymerisate weisen eine Teilchengrößenverteilung, ausgedrückt durch den Quotienten aus dem 90 %-Wert und dem 10 %-Wert von kleiner gleich 2,0, insbesondere kleiner gleich 1,5 auf.

Die Erfindung betrifft weiterhin ein Verfahren zur Herstellung der erfindungsgemäßen Perlpolymerisate, bei dem ein Monomerengemisch enthaltend
a) 50 bis 97,5, vorzugsweise 55 bis 90, insbesondere 60 bis 85 Gew.-% wenigstens eines Monomeren der Formel (I) 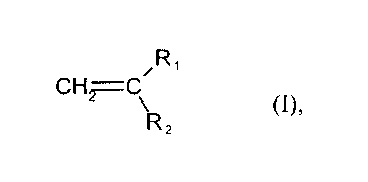
b) 2 bis 49,5, vorzugsweise 5 bis 40, insbesondere 10 bis 30 Gew.-% wenigstens eines Monomeren der Formel (II) 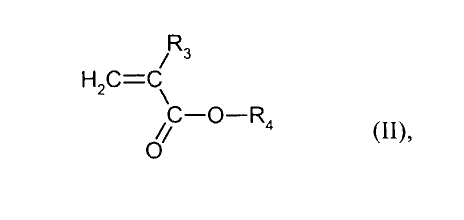 und
c) 0,5 bis 40, vorzugsweise 1 bis 20, insbesondere 2 bis 10 Gew.-% wenigstens eines Monomeren der Formel (III) 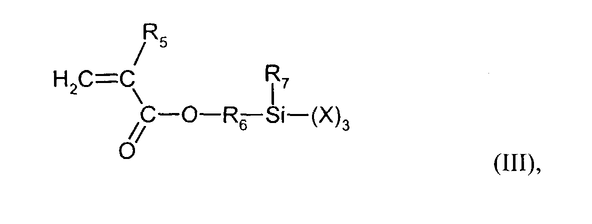 jeweils bezogen auf die Gesamtmenge des Perlpolymerisates,
   wobei die Reste R₁ bis R₇ und X die oben angegebenen Bedeutungen haben,
   durch Dispersionspolymerisation unter Verwendung eines Initiators polymerisiert wird.

Vorzugsweise ist das Verfahren dadurch gekennzeichnet, daß die Monomeren der Formeln I bis III in einem organischen oder wäßrig-organischen Lösungsmittel in Gegenwart wenigstens eines Dispergiermittels und eines Initiators polymerisiert werden und im Falle, daß man in einem organischen Lösungsmittel polymerisiert, im Anschluß daran das Polymerisat mit Wasser noch versetzt wird.

Bei dem erfindungsgemäßen Verfahren zur Herstellung von Vinylcopolymerisaten werden die oben genannten Monomeren vorzugsweise in einem Lösungsmittel unter Verwendung eines Initiators polymerisiert.

Das Lösungsmittel besteht vorzugsweise überwiegend aus nichtwäßrigen Lösungsmitteln, wie Dioxan, Aceton, Acetonitril, Dimethylformamid und Alkoholen. Bevorzugt sind niedere Alkohole, insbesondere Methanol, Ethanol, n-Propanol, iso-Propanol, n-Butanol, iso-Butanol und tert.-Butanol. Gut geeignet sind auch Mischungen verschiedener Lösungsmittel, insbesondere Mischungen verschiedener Alkohole. Die Alkohole können auch bis zu 50 Gew.% Wasser, bevorzugt bis zu 25 Gew.% Wasser enthalten. Bei Verwendung von Lösungsmittelgemischen können auch unpolare Lösungsmittel, insbesondere Kohlenwasserstoffe, wie Hexan, Heptan und Toluol in Anteilen bis zu 50 Gew.% mitverwendet werden.

Das Verhältnis von Monomer zu Lösungsmittel beträgt vorzugsweise 1 : 1 bis 1 : 20, insbesondere 1 : 3 bis 1 : 10.

Das erfindungsgemäße Verfahren wird vorzugsweise in Anwesenheit eines hochmolekularen Dispergiermittel durchgeführt.

Als hochmolekulare Dispergiermittel sind im verwendeten Lösungsmittel lösliche natürliche und synthetische makromolekulare Verbindungen geeignet, insbesondere solche mit einem als Gewichtsmittel bestimmten mittleren Molekulargewicht von 5 000 bis 500 000, vorzugsweise von 10 000 bis 100 000 g/mol. Beispiele sind Cellulosederivate, wie Methylcellulose, Ethylcellulose, Hydroxypropylcellulose, Polyvinylacetat, teilverseiftes Polyvinylacetat, Polyvinylpyrrolidon, Copolymerisate aus Vinylpyrrolidon und Vinylacetat, sowie Copolymerisate aus Styrol und Maleinsäureanhydrid. Polyvinylpyrrolidon ist bevorzugt. Der Gehalt an hochmolekularem Dispergiermittel beträgt vorzugsweise 0,1 bis 20 Gew.%, insbesondere 0,2 bis 10 Gew.%, bezogen auf das Lösungsmittel.

Zusätzlich zu den Dispergiermitteln können auch ionische und nicht ionische Tenside eingesetzt werden. Geeignete Tenside sind z.B. Sulfobernsteinsäure-Natriumsalz, Methyltricaprylammoniumchlorid oder ethoxylierte Nonylphenole. Bevorzugt werden ethoxylierte Nonylphenole mit 4 bis 20 Ethylenoxideinheiten. Die Tenside können in Mengen von 0,1 bis 2 Gew.% bezogen auf das Lösungsmittel verwendet werden.

Für das erfindungsgemäße Verfahren geeignete Initiatoren sind Verbindungen, die bei Temperaturerhöhung freie Radikale bilden. Beispielhaft seien genannt: Peroxyverbindungen wie Dibenzoylperoxid, Dilaurylperoxid, Bis-(p-chlorbenzoyl)peroxid, Dicyclohexylperoxydicarbonat und tert.-Amylperoxy-2-ethylhexan, des weiteren Azoverbindungen wie 2,2*'*-Azobis(isobutyronitril) und 2,2*'*-Azobis(2-methylisobutyronitril). Sofern das Lösungsmittel einen Wasseranteil enthält, ist auch Natrium- oder Kaliumperoxydisulfat als Initiator geeignet.

Gut als Initiatoren geeignet sind auch aliphatische Peroxyester. Beispiele hiefür sind tert.-Butylperoxyacetat, tert.-Butylperoxyisobutyrat, tert.-Butylperoxypivalat, tert.-Butylperoxyoctoat, tert.-Butylperoxy-2-ethylhexanoat, tert.-Butylperoxyneodecanoat, tert.-Amylperoxypivalat, tert.-Amylperoxyoctoat, tert.-Amylperoxy-2-ethylhexanoat, tert.-Amylperoxyneodecanoat, 2,5-Bis(2-ethylhexanoylperoxy)-2,5-dimethylhexan, 2,5-Dipivaloyl-2,5-dimethylhexan, 2,5 -Bis(2-neodecanoylperoxy)-2,5-dimethylhexan, Di-tert.-butylperoxyazelat und Di-tert.-amylperoxyazelat.

Die Initiatoren werden im allgemeinen in Mengen von 0,05 bis 6,0 Gew.%, vorzugsweise 0,2 bis 4,0 Gew.%, bezogen auf das Monomergemisch, angewendet.

Die Polymerisationstemperatur richtet sich im allgmeinen nach der Zerfallstemperatur des Initiators, sowie nach der Siedetemperatur des Lösungsmittels und liegt typischerweise im Bereich von 50 bis 150°C, vorzugsweise 60 bis 120°C. Es ist vorteilhaft, bei der Siedetemperatur des Lösungsmittels unter ständigem Rühren mit einem Gitterrührer zu polymerisieren. Es werden vorzugsweise niedrige Rührgeschwindigkeiten angewendet. Bei 4 Liter-Laborreaktoren beträgt die Rührgeschwindigkeit eines Gitterrührers beispielsweise 100 bis 250 U/min, bevorzugt 100 U/min.

Die Polymerisationszeit beträgt im allgemeinen mehrere Stunden, z.B. 2 bis 30 Stunden.

Die in die erfindungsgemäßen Vinylcopolymerisate zunächst einpolymersierten Silanmonomereinheiten werden im Verlaufe der weiteren Herstellung so umgewandelt, daß die hydrolysierbaren Gruppen zumindest teilweise durch die Hydrolysereaktion abgespalten werden und die entstehenden Si-OH-Gruppen durch die Kondensationsreaktion der Si-OH-Gruppe zu Si-O-Si-Brücken umgewandelt werden.

Nach der Beendigung der Polymerisation kann das erhaltene Perlpolymerisat mit saurem oder alkalischem Wasser behandelt werden, um die Vernetzung in der oben beschriebenen Weise über Si-OH-Gruppen und deren Kondensation zu Si-O-Si-Gruppen zu bewirken bzw. zu vervollständigen. Hierzu kann saures oder alkalisches Wasser zum Polymerisationsansatz gegeben werden und nach erfolgter Vernetzung das Vinylcopolymerisat durch Filtration oder besonders vorteilhaft durch Sedimentation mit Hilfe einer Zentrifuge oder eines Dekanters gewonnen und gewaschen werden. Da das Vinylcopolymerisat im Verlaufe der Polymerisation aus dem polaren, nichtwäßrigen Polymerisationsmedium ausfällt, kann es jedoch auch in einer anderen Verfahrensvariante zunächst durch Filtration das Polymerisat gewonnen werden, wobei das Polymerisationsmedium rezyklisiert werden kann, woraufhin in einem getrennten zweiten Schritt das abfiltrierte Polymerisat mit saurem oder alkalischem Wasser zur Vernetzung behandelt wird.

Saures bzw. alkalisches Wasser sind hierbei wäßrige Säuren oder Laugen, beispielsweise wäßrige Salzsäure, Schwefelsäure, Essigsäure oder Phosphorsäure, wäßrige Natronlauge oder Kalilauge. Das saure bzw. alkalische Wasser wird vorzugsweise in einer solchen Menge zum Polymerisationsansatz oder zum abfiltrierten Polymerisat gegeben, daß der Polymerisationsansatz bzw. die Aufschlämmung des abfiltrierten Polymerisats in diesem Wasser einen pH-Wert von -1 bis 3, bevorzugt 0 bis 2, bzw. von 11 bis 14, bevorzugt von 12 bis 13 hat. In bevorzugter Weise wird eine saure Hydrolyse und Vernetzung vorgenommen. Die Menge des sauren bzw. alkalischen Wassers ist außer der Einstellung des genannten pH-Wertes nicht kritisch, da die zur mindestens teilweisen Hydrolyse und Vernetzung erforderliche geringe Menge Wasser stets ausreichend vorhanden ist. Bei der Variante der Zugabe von saurem bzw. alkalischem Wasser zum Polymerisationsansatz hat sich ein Verhältnis von bis zu 10 Gew.% saurem bzw. alkalischem Wasser, bezogen auf den Polymerisationsansatz, bewährt. Die Hydrolyse und Vernetzung können bei einer Temperatur von 0 bis 50°C, bevorzugt bei der Raumtemperatur, erfolgen.

Als Reaktionszeit wird, hauptsächlich abhängig von der Ansatzmenge, eine Zeit von 15 Minuten bis zu einigen Stunden angesetzt.

Bei der Verwendung eines wasserhaltigen polaren Mediums und Persulfat als Initiator findet die Vernetzungsreaktion beispielsweise in situ statt, so daß ein separater Vernetzungsschritt durch Zugabe von wäßriger Säure oder Lauge nicht notwendig ist.

Die Vernetzungsreaktion und der letztendlich erhaltene Vernetzungsgrad können analytisch in einfacher Weise durch die Bestimmung der Löslichkeit in einem guten Lösungsmittel, beispielsweise Tetrahydrofuran/Essigsäureethylester oder Dimethylformamid, verfolgt bzw. kontrolliert werden. Die Polymerisate besitzen einen Gelgehalt, gemessen in Tetrahydrofuran bei 25°C, von 90% und mehr. Die Form, Größe und Teilchendurchmesserverteilung des Perlpolymerisats werden bei der Vernetzungsreaktion nicht verändert.

Die erfindungsgemäß erhaltenen vernetzten Perlpolymerisate besitzen im Gegensatz zu den herkömmlichen unvernetzten Perlpolymerisaten wesentlich höhere Temperatur- und Lösungsmittelbeständigkeit. Die Temperaturbeständigkeit der erfindungsgemäßen vernetzten Perlpolymerisate ist dadurch gekenzeichnet, daß deren Form selbst nach mehrstündigem Erhitzen bei 250°C unverändert bleibt.

Die erfindungsgemäße Perlpolymere sind in Lösungsmitteln, wie z.B. Aceton, Tetrahydrofuran, Dimethylformamid, Methylethylketon, Acetonitril, unlöslich.

Die Erfindung betrifft weiterhin die Verwendung der erfindungsgemäßen Perlpolymerisate zum Auftragen auf ein flächiges Substrat.

Als flächige Substrate sind vorzugsweise zu nennen: Folien aus Kunststoff wie Polyester, Polycarbonat, Celluloseester, Polyvinylacetat, insbesondere Polyethylenterephthalat (PET), vorzugsweise solche zur Verwendung für Overhead-Projektoren.

Weitere geeignete Substrate sind unbeschichtete und insbesondere beschichtete Papiere auf Cellulose- oder Polyethylenbasis.

Die erfindungsgemäßen Perlpolymerisate werden vorzugsweise in einer Menge von 0,01 bis 2, insbesondere von 0,05 bis 1 g/m² auf das flächige Substrat aufgetragen.

Die Auftragung kann beispielsweise mittels einer binderhaltigen Beschichtungsmasse, die die erfindungsgemäßen Perlpolymerisate enthält, erfolgen. Als Binder sind Polymerlatices, beispielsweise Styrol-butadienlatices oder Acrylatlatices zu nennen. Besonders gut geeignet sind hydrophile Binder wie Gelatine, Polyvinylalkohol, Polyvinylpyrrolidon und Celluloseester. Sofern gewünscht, kann die aufgetragene Beschichtung durch eine Nachbehandlung gehärtet werden. Zur Härtung von Gelatineschichten eignet sich besonders Formaldehyd und Glutardialdehyd, Beschichtungen aus Polyvinylalkohol können mit Hilfe von Diisocyanaten gehärtet werden. Die Menge an Bindemittel kann beispielsweise 1 bis 50 g/m², vorzugsweise 5 bis 30 gm² betragen.

Die Auftragung der Beschichtungsmasse erfolgt aus vorzugsweise wäßriger Lösung oder Dispersion mit anschließender Trocknung. Als Beschichtungstechniken kommen alle, bekannten Beschichtungsverfahren in Frage, insbesondere Gießen, Rakeln, Sprühen und Tauchen.

Die Erfindung betrifft weiterhin flächige Substrate mit den erfindungsgemäßen Perlpolymerisaten auf ihrer Oberfläche.

Die erfindungsgemäßen flächigen Substrate, insbesondere Kunststoff-Folien und beschichteten Papiere weisen insbesondere als Aufzeichnungsmaterial im Ink-Jet-Druck besonders hohe Wischechtheiten der hergestellten Images auf.

Die Erfindung betrifft weiterhin die Verwendung der erfindungsgemäßen flächigen Substrate als Aufzeichnungsmaterial für den Ink-Jet-Druck.

### Beispiele

### Beispiele 1-5

In einem mit einem Gitterrührer ausgerüsteten 4 L-Reaktor wurden 2 400 g Methanol, 180 g Polyvinylpyrrolidon (PVP) und 300 g Monomergemisch bestehend aus Methylmethacrylat, einem Monomer der Formel II (Tabelle 1) und einem Monomer der Formel III (Trimethoxysilylpropyloxymethacrylat) zu einer homogenen Lösung gemischt. Unter Stickstoff wurde diese Lösung innerhalb einer Stunde bei einer Rührgeschwindigkeit von 100 U/min auf 55°C aufgeheitzt und mit 3 g 2,2'-Azobis(isobutyronitril) gelöst in 117 g Methanol versetzt. Die Polymerisationsmischung wurde weitere 20 Stunden bei 55°C und 100 U/min gerührt. Anschließend wurde die fertige Polymerdispersion auf Raumtemperatur abgekühlt und innerhalb von 30 Minuten wurden 200 g 1n-HCl dazugetropft. Die sauere Reaktionsmischung wurde 3 h bei Raumtemperatur gerührt und das Perlpolymerisat wurde durch Sedimentation isoliert. Die Perlpolymerisate wurden mit Methanol und Wasser gewaschen und bei 70°C im Trockenschrank getrocknet.

Die Teilchengrößen der erhaltenen Perlpolymerisate sind in der Tabelle 1 aufgeführt. Der unlösliche Anteil der Perlpolymerisate wurde folgendermaßen ermittelt:

Es wurde 2 g des jeweiligen vernetzten Perlpolymerisats, das bereits mit Ethanol bzw. Methanol und Wasser gewaschen und getrocknet wurde, mit 10 mL THF versetzt und bei Raumtemperatur 10 Stunden gerührt wurde. Anschließend wurde das Polymerisat abfiltriert und zurückgewogen. Der unlösliche Anteil ergab sich aus dem Verhältnis des zurückgewogenen zum eingesetzten Polymerisats.

Perlpolymerisate mit einem hohen unlöslichen Anteil sind hochvernetzt. Sie sind temperaturstabil und lösemittelbeständig.

**Tabelle 1**

| vernetzte Methylmethacrylat-Copolymerisate als Beispiele | | | | | | |
|---|---|---|---|---|---|---|
| **Beispiel** | 1 | 2 | 3 | 4 | 5 | 6 |
| **Monomer 1** | MMA | MMA | MMA | MMA | MMA | MMA |
| **Monomer 1 [g]** | 210 | 165 | 240 | 260 | 216 | 250 |
| **Monomer II** | EtMA | n-BuMA | n-BuMA | n-BuMA | EtMA | EtHexMA |
| **Monomer II [g]** | 90 | 120 | 60 | 40 | 90 | 30 |
| **Monomer III** | Si A174 | Si A174 | Si A174 | Si A174 | Si A174 | Si A174 |
| **Monomer III [g]** | 15 | 15 | 15 | 15 | 9 | 20 |
| Ø **[µm]** | 21,62 | 41,90 | 28,71 | 16,29 | 16,21 | 16.01 |
| Ø₍₁₀₎ **[µm]** | 18,20 | 31,73 | 21,84 | 14,40 | 14,20 | 13,40 |
| Ø₍₉₀₎ **[µm]** | 27,26 | 60,29 | 35,28 | 17,56 | 19,37 | 16,75 |
| Ø₍₉₀₎/Ø₍₁₀₎ | 1,40 | 1,9 | 1,6 | 1,21 | 1,36 | 1,25 |
| **Unlöslicher Anteil [%]** | 96,7 | 97,3 | 95,3 | 88 | 93 | 94 |

| | | | | | | |
|---|---|---|---|---|---|---|
| MMA = Methylmethacrylat; | | | | | | |
| EtMA = Ethylmethacrylat; | | | | | | |
| n-BuMA = n-Butylmethacrylat; | | | | | | |
| Si A174 = Trimethoxysilylpropyloxymethacrylat | | | | | | |
| EtHexMA = Ethylhexylmethacrylat | | | | | | |

### Beispiele 6-7

Die Polymerisationen, Vernetzung und Aufarbeitungen wurden in gleicher Weise wie in Beispielen 1-5 durchgeführt. In einem mit einem Gitterrührer ausgerüsteten 4 L-Reaktor wurden 2 500 g Ethanol, 54 g Polyvinylpyrrolidon (PVP) und 300 g Monomergemisch bestehend aus Styrol, einem Monomer der Formel II (Tabelle 1) und einem Monomer der Formel III (Trimethoxysilylpropyloxymethacrylat) zu einer homogenen Lösung gemischt. Unter Stickstoff wurde diese Lösung innerhalb einer Stunde bei einer Rührgeschwindigkeit von 100 U/min auf 70°C aufgeheitzt und mit 3,75 g 2,2'-Azobis(isobutyronitril) gelöst in 75 g Methanol versetzt. Die Polymerisationsmischung wurde weitere 15 Stunden bei 70°C und 100 U/min gerührt. Anschließend wurde die fertige Polymerdispersion auf Raumtemperatur abgekühlt und innerhalb von 30 Minuten wurden 200 g 1n-HCl dazugetropft. Die sauere Reaktionsmischung wurde 3 h bei Raumtemperatur gerührt und das Perlpolymerisat wurde durch Sedimentation isoliert. Die Perlpolymerisate wurden mit Ethanol und Wasser gewaschen und bei 70°C im Trockenschrank getrocknet.

Die eingesetzten Monomergemische und die Teilchengrößen der Perlpolymerisate sind in Tabelle 2 aufgelistet. Der unlöslicher Anteil der Perlpolymerisaten wurde entsprechend der in den Beispielen 1-5 beschriebenen Arbeitsweise ermittelt.

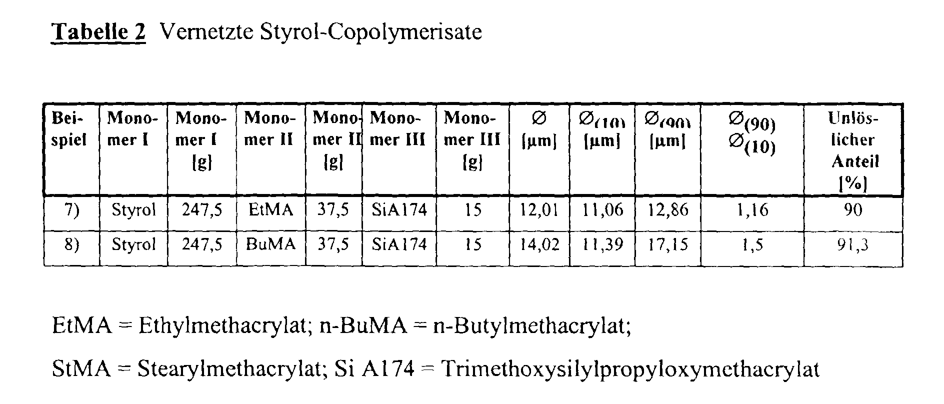

## Patentansprüche

1. Perlpolymerisate mit einer mittleren Teilchengröße von größer als 10 und kleiner gleich 50 µm und einer Teilchengrößenverteilung ausgedrückt durch das Verhältnis des 90%-Wertes (Ø (90)) und des 10%-Wertes (Ø (10)) der Volumenverteilung von kleiner 2,0, aufgebaut aus
a) 50 bis 97,5, vorzugsweise 55 bis 90 Gew.-% wenigstens eines Monomeren der Formel (I) 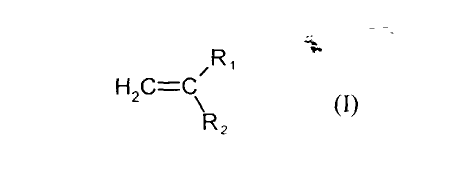 worin
R₁ Wasserstoff oder Methyl und
R₂ Phenyl oder -COOCH₃ bedeuten,
b) 2 bis 49,5, vorzugsweise 5 bis 40 Gew-% wenigstens eines Monomeren der Formel (II) 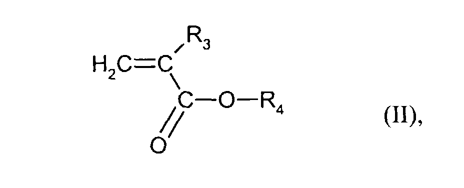 worin
R₃ Wasserstoff oder Methyl bedeutet und
R₄ für einen Rest mit 2 bis 20 C-Atomen steht, und
c) 0,5 bis 40, vorzugsweise 1 bis 20 Gew.-% eines Monomeren der Formel (III) 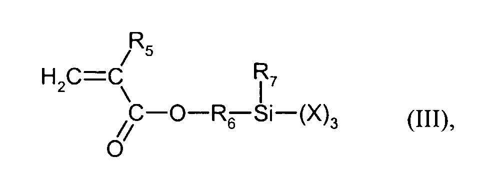 worin
R₅ Wasserstoff oder Methyl bedeutet,
R₆ für einen zweiwertigen Rest mit 2 bis 8 C-Atomen steht,
R₇ ein Alkylrest mit 1 bis 4 C-Atomen bedeutet
und
X für eine hydrolisierbare Gruppe steht,
jeweils bezogen auf die Gesamtmenge des Perlpolymerisates.

2. Perlpolymerisate gemäß Anspruch 1, dadurch gekennzeichnet, daß als Monomere der Formel (I) Methylmethacrylat, Methylacrylat, Styrol und α-Methylstyrol in Frage kommen.

3. Perlpolymerisate gemäß Anspruch 1, dadurch gekennzeichnet, daß als Monomere der Formel (II) in Frage kommen: Ethylmethacrylat, n-Propylmethacrylat, iso-Propylmethacrylat, n-Butylmethacrylat, iso-Butylmethacrylat, n-Hexylmethacrylat, 2-Ethylhexylmethacrylat, n-Octylmethacrylat, n-Decylmethacrylat, Stearylmethacrylat, Methoxyethylmethacrylat, Methoxybutylmethacrylat, iso-Bornylmethacrylat und Triethylenglycolmonomethacrylat; bevorzugt sind Ethylmethacrylat, n-Propylmethacrylat, iso-Propylmethacrylat, n-Butylmethacrylat und iso-Butylmethacrylat.

4. Perlpolymerisate gemäß Anspruch 1, dadurch gekennzeichnet, daß als Monomere der Formel (III) in Frage kommen: γ-Methacryloxypropyl-trimethoxysilan, γ-Methacryloxypropyl-triethoxysilan, γ-Methacryloxypropylmethyl-dimethoxysilan, γ-Methacryloxypropyl-methyldiethoxysilan, γ-Acryloxypropyl-trimethoxysilan, γ-Acryloxypropyl-triethoxysilan, γ-Acryloxypropyl-methyl-dimethoxysilan, γ-Acryloxypropyl-methyl-diethoxysilan.

5. Verfahren zur Herstellung der Perlpolymerisate gemäß Anspruch 1, dadurch gekennzeichnet, daß man ein Monomerengemisch enthaltend
a) 50 bis 97,5, vorzugsweise 55 bis 90 Gew.-% wenigstens eines Monomeren der Formel (I) 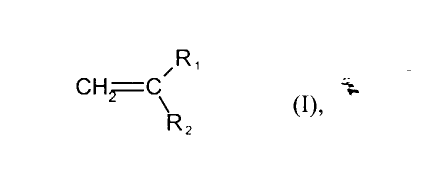
b) 2 bis 49,5, vorzugsweise 5 bis 40 Gew.-% wenigstens eines Monomeren der Formel (II) 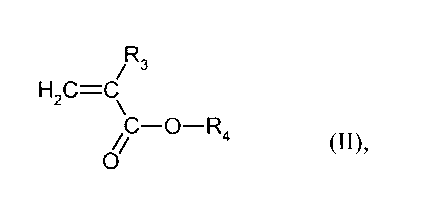 und
c) 0,5 bis 40, vorzugsweise 1 bis 20 Gew.-% wenigstens eines Monomeren der Formel (III) 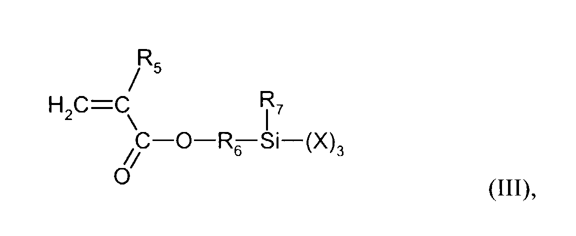 jeweils bezogen auf die Gesamtmenge des Vinylcopolymerisates,
wobei die Reste R₁ bis R₇ und X die in Anspruch 1 angegebenen Bedeutungen haben,
durch Dispersionspolymerisation unter Verwendung eines Initiators polymerisiert.

6. Verwendung der Perlpolymerisate gemäß Anspruch 1 zum Auftragen auf ein flächiges Substrat.

7. Flächige Substrate, die Perlpolymerisate gemäß Anspruch 1 auf ihrer Oberfläche tragen.

8. Verwendung der flächigen Substrate gemäß Anspruch 7 als Aufzeichnungsmaterial für den Ink-Jet-Druck.
